(19) Europäisches Patentamt / European Patent Office / Office européen des brevets

(11) **EP 2 901 515 B1**

(12) **EUROPEAN PATENT SPECIFICATION**

(45) Date of publication and mention
of the grant of the patent:
**22.05.2019 Bulletin 2019/21**

(21) Application number: **13773575.9**

(22) Date of filing: **27.09.2013**

(51) Int Cl.:
*H01M 4/20* (2006.01)     *H01M 10/06* (2006.01)
*H01M 4/62* (2006.01)     *H01M 4/22* (2006.01)

(86) International application number:
**PCT/US2013/062176**

(87) International publication number:
**WO 2014/052753 (03.04.2014 Gazette 2014/14)**

(54) **METHOD OF MAKING ACTIVE MATERIAL COMPOSITIONS COMPRISING HIGH SURFACE AREA CARBONACEOUS MATERIALS**

VERFAHREN ZUR HERSTELLUNG VON AKTIVMATERIALZUSAMMENSETZUNGEN UMFASSEND KOHLENSTOFFHALTIGE MATERIALIEN MIT GROSSER OBERFLÄCHE

METHOD DE PREPARATION DE COMPOSITIONS DE MATÉRIAU ACTIF COMPORTANT DES MATÉRIAUX CARBONÉS À SURFACE SPÉCIFIQUE ÉLEVÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2012 US 201261707155 P**

(43) Date of publication of application:
**05.08.2015 Bulletin 2015/32**

(73) Proprietor: **Cabot Corporation
Boston, MA 02210 (US)**

(72) Inventors:
• **HARDMAN, Ned, J.
Woodside, California 94062 (US)**
• **ATANASSOVA, Paolina
Billerica, Massachusetts 01821 (US)**
• **OLJACA, Miodrag
Billerica, MA 01821 (US)**
• **BLIZANAC, Berislav
Billerica, MA 01821 (US)**
• **KOEHLERT, Kenneth C.
Billerica, MA 01821 (US)**
• **DUPASQUIER, Aurelien L.
Billerica, MA 01821 (US)**

(74) Representative: **Grünecker Patent- und Rechtsanwälte
PartG mbB
Leopoldstraße 4
80802 München (DE)**

(56) References cited:
EP-A1- 2 472 650     WO-A2-90/14693
JP-A- H1 069 900     JP-A- H05 174 825
JP-A- 2008 152 955     US-A1- 2003 180 613
US-A1- 2010 051 857     US-A1- 2012 171 564

**Description**

**FIELD OF THE INVENTION**

Disclosed herein are methods of making negative active material compositions comprising high surface area carbon blacks, which can be used as electrode materials in lead acid batteries.

**BACKGROUND**

There is a continual need to improve the performance of lead acid batteries. Metrics for battery performance include cycle life, dynamic charge acceptance (DCA), water loss, and cold crank ability. Cold crank ability can be measured as "cold crank time" and is determined as follows: after reducing the battery temperature to -18°C for 24 hours, the battery is then discharged at a high rate (5-14C). The time necessary for the battery voltage to decrease from the initial 14.4 V to 6V is defined as the cold crank time. Due to the ever widening applications for lead acid batteries, there remains a need to improve battery performance, including improving DCA and cycle life while maintaining or improving cold crank ability and/or decreasing water loss.

JP 2008-152955 A discloses a method of making a negative electrode active material composition comprising carbon black having a surface area of 250 $m^2$/g or more and an organic molecule expander.

JP H05-174825 A describes a method of making a negative electrode active material composition comprising 0.2 wt% carbon black having a surface area of 240 to 800 $m^2$/g; and 0.2 wt% lignin, said method comprising the steps of combining a lead oxide, the organic molecule expander, and $BaSO_4$ to form a dry powder mixture; combining the dry powder mixture with water, to which sulfuric acid is subsequently added, to form a slurry; adding to the slurry the carbon black and forming a paste intermediate of the negative active material composition.

**SUMMARY**

The present invention provides a method of making a negative electrode active material composition for a lead acid battery comprising a carbon black having a surface area of at least 250 $m^2$/g and an organic molecule expander, wherein the ratio of the carbon black to expander ranges from 5:1 to 1:1, said method comprising:

combining a lead oxide, an organic molecule expander, and $BaSO_4$ to form a dry powder mixture;

adding a pre-wetted carbon black having a surface area of at least 250 $m^2$/g to the dry powder mixture;

combining sulfuric acid and water with the mixture containing the carbon black to form a slurry;

forming a paste intermediate of the negative electrode active material composition; and

drying the paste intermediate to form a solid negative electrode active material composition,

wherein the negative electrode active material composition is a porous solid having a median pore size ranging from 0.8 $\mu$m to 4 $\mu$m.

Preferred embodiments of the present invention are set forth in the dependent claims.

**BRIEF DESCRIPTION OF THE DRAWING(S)**

FIG. 1A (prior art) schematically illustrates the structure of a surface of a lead-containing species for a NAM material;

FIG. 1B schematically illustrates the structure of a surface of a lead-containing species for the negative electrode active material compositions as disclosed herein; and

FIG. 2 is a graph depicting the correlation of mixing method of carbon black with lignosulfonate and amount of carbon black (x-axis, wt. %) with pore size (y-axis, median pore radius (volume, $\mu$m)).

## DETAILED DESCRIPTION

Disclosed herein are methods of making negative electrode active material compositions (e.g. negative active mass or NAM), which can be used in electrodes for lead acid batteries.

Upon discharging a lead acid battery, a smooth $PbSO_4$ layer may form on the negative lead electrode. This layer passivates the electrode by blocking the release of $Pb^{2+}$ ions necessary for current flow, resulting in a reduction in battery capacity and power output. The problem can be alleviated by the addition of expanders (e.g., organic molecules such as lignosulfonate) that can retard $PbSO_4$ film growth by adsorbing onto and coating the lead surface. The lignosulfonate promotes formation of a porous $PbSO_4$ solid and prevents growth of a smooth $PbSO_4$ layer. Additionally, if lignosulfonate is not present at the lead surface during curing and formation, the lead can sinter to form a non-porous/low porosity monolith, which results in low cold crank ability.

Carbon materials are also typically added to the expander composition to improve conductivity, crystallite growth control, and electron transfer processes at the NAM - charge and discharge can also occur at the carbon surface. However, the lignosulfonate has a tendency to coat the carbon surface, reducing its availability for coating the lead surface that helps prevent the formation of the $PbSO_4$ passivating layer. Moreover, small particle carbon can fill in the pores of the composition resulting in reduced median pore size.

Controlling water loss is another consideration in the design of low-maintenance or maintenance-free lead acid batteries. Water loss in lead acid batteries occurs during charge and over-charge, and is due to evolution of hydrogen on the negative plate and oxygen evolution on the positive plate. The water loss in lead acid batteries is affected by the positive and negative plate potentials during charge, and can be influenced by the presence of certain metal impurities in the acid electrolyte, grids and electrode components. The addition of carbon in the negative plates leads to increased water loss, which depends on the amount and type of carbon (surface area and morphology). A relationship between electrode surface area and negative plate potential can be illustrated with the Butler-Vollmer for hydrogen reduction, shown as equation (1) below:

$$I = -A.i_0.exp[-\alpha_c nF/RT(E-E_{eq})] \qquad (1)$$

where, $I$ = cathodic current; $A$ = electrode surface area; $E$ = negative plate potential.

While the exact mechanism of the effect of carbon on water loss in lead acid batteries is still under investigation, from equation (1) it is a likely effect that the addition of carbon to the negative plate can lead to increased surface area of the negative electrode and therefore to the depolarization of the negative electrode. The depolarization of the negative electrode can then lead to lower values in the electrode potential and therefore can increase the hydrogen evolution rates both from lead and carbon surfaces. The depolarization of the negative plate can lead to polarization of the positive plate and therefore increased oxygen evolution rates on the positive electrode. Both increased hydrogen evolution on the negative electrode and increased oxygen evolution on the positive plate can contribute to increased water loss.

Using a negative active material comprising high surface area carbonaceous materials results in improved DCA and cycle life. However, high surface area carbonaceous materials can deleteriously reduce the cold crank ability and/or increased water loss on overcharge. It has been discovered that increasing the expander concentration and/or increasing the porosity of the negative active materials improves the cold crank ability and/or decreases the amount of water loss. The embodiments disclosed herein can allow incorporation of the high surface area carbonaceous materials to exploit its other advantages. Accordingly, the present invention provides a method of making a negative electrode active material composition according to appended claim 1.

"Carbon black" includes all forms of the material such as lamp black, furnace black, acetylene black, channel black, etc.

"Organic molecule expander" as defined herein is a molecule capable of adsorbing or covalently bonding to the surface of a lead-containing species to form a porous network that prevents or substantially decreases the rate of formation of a smooth layer of $PbSO_4$ at the surface of the lead-containing species. In one embodiment, the organic molecule expander has a molecular weight greater than 300 g/mol. Exemplary organic molecule expanders include lignosulfonates, lignins, wood flour, pulp, humic acid, and wood products, and derivatives or decomposition products thereof. In one embodiment, the expander is selected from lignosulfonates, a molecule having a substantial portion that contains a lignin structure. Lignins are polymeric species comprising primarily phenyl propane groups with some number of methoxy, phenolic, sulfur (organic and inorganic), and carboxylic acid groups. Typically, lignosulfonates are lignin molecules that have been sulfonated. Typical lignosulfonates include the Borregard Lignotech products UP-393, UP-413, UP-414, UP-416, UP-417, M, D, and VS-A (Vanisperse A). Other useful exemplary lignosulfonates are listed in, "Lead Acid Batteries", Pavlov, Elsevier Publishing, 2011.

In another embodiment, the carbon black has a surface area (BET) ranging from 250 $m^2/g$ to 2100 $m^2/g$, such as surface area ranging from 400 $m^2/g$ to 1800 $m^2/g$, from 700 $m^2/g$ to 1700 $m^2/g$, from 1000 $m^2/g$ to 2600 $m^2/g$, or

from 1000 $m^2/g$ to 1700 $m^2/g$.

In another embodiment, the structure of the carbon black can be measured by DBP. In one embodiment, the DBP for these carbon blacks can range from 32 mL/100 g to 500 mL/100g, such as a DBP ranging from 80 to 350 mL/100 g, or from 110 to 250 mL/100 g.

Current lead acid batteries employ low surface area carbon blacks that can achieve acceptable cold crank times. In an attempt to improve DCA and cycle life, a higher surface area carbon black was incorporated using the standard prior art configuration. However, because the expander has a tendency to adhere to the carbon black, it was discovered that less expander was available for the surface of the lead-containing species due to competing adsorption with the higher surface area carbon black. Subsequently there was a lesser amount of expander film on the lead-containing surface to counteract passive $PbSO_4$ film formation, and the resulting $PbSO_4$ film formed upon discharge exhibited lower median pore sizes (or smooth film formation) thereby preventing the release of $Pb^{2+}$. As a result, cold crank times would deleteriously decrease by as much as 50-70% compared to the value achieved by the standard battery. It has been discovered that the negative active material compositions disclosed herein can incorporate high surface area carbon blacks by allowing a greater amount of expander to adhere to the lead-containing surface (as opposed to the carbon surface), thereby causing porous $PbSO_4$ film formation. Batteries incorporating the materials disclosed herein achieve cold crank times comparable with that of the standard battery while exhibiting improved DCA and cycle life.

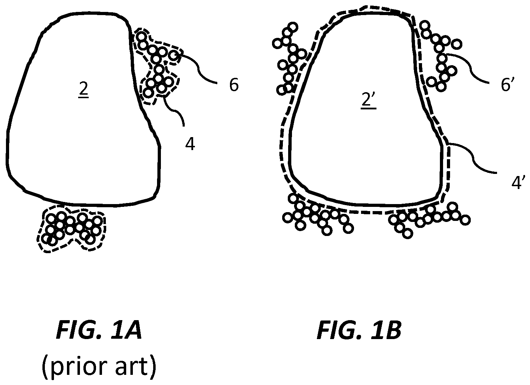

Without wishing to be bound by any theory, FIGs. 1A and 1B schematically illustrate the structure of a surface of a lead-containing species (e.g., $Pb/PbO/PbSO_4$) for a NAM material incorporating a high surface area carbonaceous material (carbon black) (FIG. 1A) having the prior art configuration, and for the composition as disclosed herein (FIG. 1B). In FIGs. 1A and 1B, adhered onto lead-containing surfaces 2 and 2', respectively, are organic molecule expander 4 and 4' (dashed lines) and carbonaceous materials 6 and 6'. However, in FIG. 1A, a significant portion of the expander 4 coats the carbonaceous material 6, leaving a substantial portion of the lead-containing surface 2 uncoated by the expander 4, rendering the surface vulnerable to growth of a smooth $PbSO_4$ layer of low or no porosity.

The disclosed materials are prepared in such a way as to incorporate the high surface area carbonaceous materials 6' such that a significant portion of the expander 4' is available to coat the lead-containing surface 2', preventing growth of the passivating layer of $PbSO_4$ upon rapid discharge. The presence of a higher concentration of expander 4' can allow an increased portion of the lead-containing surface 2' to be coated by the expander 4'. Additionally, the composition has sufficient median pore size in the presence of a high external surface area carbonaceous material. Typically, the presence of a high external surface area carbonaceous material will result in a less porous electrode that possesses a median pore size of less than 1.0 $\mu$m or less than 1.5 $\mu$m, as measured by mercury porosimetry. In one embodiment, at least 20% of the organic molecule expander in the composition coats a surface of the lead-containing species. In another embodiment, at least 30%, at least 40%, or at least 50% of the expander in the composition coats a surface of the lead-containing species.

The obtained negative active material has a median pore size sufficient to achieve acceptable cold crank ability. Although a layer of the organic molecule expander promotes porosity of the negative active material, $PbSO_4$ particles can also hinder release of $Pb^{2+}$ by blocking the pores. Thus, the presence of larger pores will avoid blockage by $PbSO_4$ particles. Accordingly, the negative active materials disclosed herein have a median pore size ranging from 0.8 $\mu$m to 4 $\mu$m, from 0.8 $\mu$m to 3.5 $\mu$m, or from 0.8 $\mu$m to 3.5 $\mu$m, such as a median pore size ranging from 1.2 $\mu$m to 4 $\mu$m, from 1.2 $\mu$m to 3.5 $\mu$m, from 1.2 $\mu$m to 3 $\mu$m, from 1.5 $\mu$m to 4 $\mu$m, from 1.5 $\mu$m to 3.5 $\mu$m, from 1.5 $\mu$m to 3 $\mu$m, from 1.8 $\mu$m to 4 $\mu$m, from 1.8 $\mu$m to 3.5 $\mu$m, or from 1.8 $\mu$m to 3 $\mu$m.

The use of high surface area carbon black allows the formation of high surface area (BET) negative active materials.

The negative active material described herein may further comprise a lead-containing material and $BaSO_4$. The lead-containing material may be selected from lead, PbO, $Pb_3O_4$, $Pb_2O$, and $PbSO_4$, hydroxides thereof, acids thereof, and other polymetallic lead complexes thereof. A source of the lead-containing material can be leady oxide, which comprises primarily PbO and lead. During manufacture of the negative active material, $PbSO_4$ is generated in a reaction between the leady oxide and $H_2SO_4$.

It has been discovered that the amount of carbon black and/or the organic molecule expander can affect the pore size. The ratio of carbon black to expander ranges from 5:1 to 1:1, e.g., from 4:1 to 1:1 or from 3:1 to 1:1. In another embodiment, the carbon black is present in an amount ranging from 0.05% to 3% by weight and the organic molecule expander is present in an amount ranging from 0.1% to 1.5% by weight, from 0.2% to 1.5% by weight, or from 0.3% to 1.5% by weight, relative to the total weight of the composition. In one embodiment, the carbon black is present in an amount ranging from 0.15% to 3% by weight relative to the total weight of the composition, e.g., in an amount ranging from 0.15% to 2% by weight, from 0.15% to 1.2% by weight, from 0.15% to 1% by weight, from 0.25% to 3% by weight, from 0.25% to 2% by weight, from 0.25% to 1.5% by weight, from 0.25% to 1.2% by weight, from 0.25% to 1% by weight, from 0.4% to 3% by weight, from 0.4% to 2% by weight, from 0.4% to 1.5% by weight, from 0.4% to 1.2% by weight, from 0.4% to 1% by weight, from 0.5% to 3% by weight, from 0.5% to 2% by weight, from 0.5% to 1.5% by weight, from 0.5% to 1.2% by weight, from 0.5% to 1% by weight, from 0.6% to 3% by weight, from 0.6% to 2% by weight, from 0.6% to 1.5% by weight, from 0.6% to 1.2% by weight, or from 0.6% to 1% by weight.

In one embodiment, the organic molecule expander is present in the negative active material composition in an amount ranging from 0.1% to 1.5% by weight relative to the total weight of the composition, e.g., from 0.2% to 1.5% by weight, from 0.2% to 1% by weight, from 0.3% to 1.5% by weight, from 0.3% to 1% by weight, or from 0.3% to 0.8% by weight.

In one embodiment, both the carbon black and the organic molecule expander is present in the negative active material composition in an amount ranging from 0.1% to 2% by weight relative to the total weight of the composition, e.g., from 0.1% to 1.5% by weight. In another embodiment, the carbon black is present in an amount ranging from 0.2% to 1.5% by weight relative to the total weight of the composition, e.g., from 0.3% to 1.5% by weight, and the organic molecule expander is present in an amount ranging from 0.2% to 1.5% by weight, from 0.3% to 1.5% by weight, from 0.2% to 1% by weight, or from 0.3% to 1% by weight.

The present invention provides a method of making a negative electrode active material composition for a lead acid battery, comprising:

combining a lead oxide, an organic molecule expander, and $BaSO_4$ to form a dry powder mixture;

adding a pre-wetted carbon black having a surface area of at least 250 $m^2/g$ to the dry powder mixture;

combining sulfuric acid and water with the mixture containing the carbon black to form a slurry;

forming a paste intermediate of the negative electrode active material composition; and

drying the paste intermediate to form a solid negative electrode active material composition,

wherein the negative electrode active material composition is a porous solid having a median pore size ranging from 0.8 $\mu$m to 4 $\mu$m.

In one embodiment, the step of combining sulfuric acid and water with the mixture containing the carbon black can be performed in any order, e.g., water is added initially followed by the addition of sulfuric acid, or in reverse order, or the combining step comprises simultaneous addition of sulfuric acid and water to form a paste.

The drying of the paste intermediate is achieved by a slow cure, such as under controlled humidity conditions and a moderate amount of heat (e.g., from 30 to 80°C or from 35 to 60°C) under controlled humidity, resulting in a porous solid. The curing step can then be followed by a second heating step (drying) at an elevated temperature (e.g., from 50 to 140°C or from 65 to 95°C) at extremely low humidity, or even zero humidity. In one embodiment, the composition is a monolith. Other pasting, curing, and formation procedures are described in "Lead Acid Batteries," Pavlov, Elsevier Publishing, 2011.

In one embodiment, the paste intermediate is deposited (pasted) onto a substrate, such as a grid and allowed to dry on the substrate to form the electrode. In one embodiment, the grid is a metallic structures that come in a myriad of designs and shapes (e.g., punched or expanded from sheets), functioning as the solid permanent support for the active material. The grid also conducts electricity or electrons to and away from the active material. Grids can comprise pure metals (e.g., Pb) or alloys thereof. The components of those alloys can comprise Sb, Sn, Ca, Ag, among other metals described in "Lead Acid Batteries," Pavlov, Elsevier Publishing, 2011.

In this method, the organic molecule expander is allowed to combine with the lead oxide prior to the addition of the carbon black, thereby promoting the formation of larger pore sizes during the drying of the paste.

It can be seen that the compositions and methods disclosed herein can increase pore size of the negative electrode active material, resulting in improved battery performance (DCA, life cycle) while maintaining or even improving the cold crank ability compared to prior art lead acid batteries.

EXAMPLES

### Examples 1-4

This Example describes the preparation of an NAM paste in which pre-wetted carbon black is added to a dry mixture of leady oxide, $BaSO_4$ and Vanisperse A.

Leady oxide (1000 g, 75 % degree of oxidation, Barton oxide from Monbat PLC, Bulgaria) was introduced into the paste mixer. After 2 minutes of stirring, $BaSO_4$ (8 g) and Vanisperse A were added along with carbon black (PBX51®, Cabot Corporation) that was prewetted with water. The dry mixture was homogenized in the paste mixer via stirring for an additional 3 minutes followed by the addition of water (140 g). The paste was mixed for 5 minutes at which point $H_2SO_4$ (80 mL, specific density = 1.4 g/cm$^3$) was added and mixed for 15 minutes. More water can be added to adjust paste rheology; however, this was not needed for this example.

Table 1 below provides the amounts of Vanisperse and carbon black for each Example.

**Table 1**

|  | Example 1 | Example 2 | Example 3 | Example 4 |
|---|---|---|---|---|
| Vanisperse A (g) | 2 | 2 | 4 | 6 |
| carbon black (g) | 5 | 10 | 10 | 10 |
| prewetted in water (g) | 11 | 22 | 22 | 22 |

**Example 5**

This Example describes an alternative method for the preparation of a NAM paste, where pre-wetted carbon black was added to the paste mix after the addition of sulfuric acid.

Leady oxide (1000 g, 75 % degree of oxidation, Barton oxide from Monbat PLC, Bulgaria) was mixed alone in a paste mixer for 2 minutes to break up loose agglomerates. To this dry powder, lignosulfonate (2 g, Vanisperse A) and $BaSO_4$ (8 g) was added and mixed as a dry powder for an additional 3 minutes. Water (140 g) was then added and mixed for additional 5 minutes, followed by the addition of sulfuric acid (80 mL, specific density = 1.4 g/cm$^3$), and subsequent mixing for 15 minutes. Carbon black (10 g, PBX51®, Cabot Corporation, surface area of 1400 m2/g) was pre-wetted with water (22 g) and added to the mixture and mixed for 15 minutes. Additional water may be added to meet the desired consistency of the paste; however, in this case no additional water was needed.

**Example 6 (Reference)**

This Example describes the preparation of an intermediate NAM paste.

Leady oxide (1000 g, 75 % degree of oxidation, Barton oxide from Monbat PLC, Bulgaria) was mixed alone in a paste mixer for 2 minutes to break up loose agglomerates. To this dry powder, lignosulfonate (2 g, Vanisperse A) and $BaSO_4$ (8 g) was added and mixed as a dry powder for an additional 3 minutes. Water (140 g) was then added and mixed for additional 5 minutes, followed by the addition of sulfuric acid (80 mL, specific density = 1.4 g/cm$^3$), and subsequent mixing for 15 minutes. The product is an intermediate NAM paste to which carbon black can be added in desired amounts.

**Example 7**

This Example describes the preparation of an electrode from an intermediate paste.

The NAM paste was deposited onto a lead grid and cured in a controlled atmosphere followed by drying. The dried electrode plate was electrochemically treated in the presence of sulfuric acid electrolyte, resulting in a formed Negative Active Material (NAM) containing 85-100% lead at the negative electrode.

**Example 8**

This Example describes the configuration of 4.8Ah lead acid test cells used for testing the cold crank times and water loss.

Testing was conducted in lead-acid cells with 2 negative and 3 positive plates with nominal capacity 4.8 Ah. The rated capacity of the cells was calculated at 50% utilization of the negative active material. AGM separators (H&V, USA) with a thickness of 3 mm (425 g m$^{-2}$) were used under 20% compression. The electrolyte was a 1.28 g cm$^{-3}$ $H_2SO_4$ solution.

**Example 9**

The negative electrodes were prepared from the materials of Examples 1-6, manufactured by the method of Example 7 and assembled in cells as described in Example 8. Positive electrodes were identical in all cases and composed of 90-100% PbO.

Cold crank times were obtained at -18°C via a modified version of Deutches Institut fur Normung or DIN test 43539 and are listed in Table 2 below. Specifically, the method was modified to go to a higher C rate of 10C for 10 seconds followed by 6C for the remainder of the test, whereas, the typical DIN 43539 is performed at 5C. The results at 5C showed a similar trend to the reported values in Table 2. It should be noted that these tests are on cells and not on full batteries, therefore, the voltages are reduced by a factor of 6. The initial voltage is 2.4 V (not 14.4 V) for cell and failure voltage is 1.0 V (vs. 6 V for full battery).

Water loss for the cells was tested by placing the cells from in a water bath at 60°C and applying a constant voltage of 2.4V for 3 weeks. The water loss was measured by the difference in cell weight before the start of the test and after 3 weeks of overcharge at 2.4V (the corresponding overcharge voltage for a full battery is 14.4V). The weight loss (water loss) was normalized by the cells rated capacity in Ah, and presented in Table 2 in [g/Ah].

**Table 2**

|  | Voltage after 10 sec [V] | Voltage after 40 sec [V] | Total time duration [sec] | Water loss [g/Ah] |
|---|---|---|---|---|
| **0.5% PBX51P (Example 1)** | 1.33 | 1.51 | 91 | 4.12 |
| **1.00% PBX51P VS-A at 0.2 % (Example 2)** | 1.28 | 1.45 | 71 | 7.78 |
| **1.00% PBX51P + 0.4% VS-A (Example 3)** | 1.27 | 1.45 | 86 | 3.00 |
| **1.00% PBX51P + 0.6% VS-A (Example 4)** | 1.31 | 1.50 | 117 | 3.43 |
| **1.00% PBX51P (Example 5)** | 1.39 | 1.55 | 102 | -- |
| **0% carbon (Example 6)** |  |  |  | 1.26 |

From the results of the cells tested with the NAM pastes of Examples 6 (0% carbon), Example 1 (0.5% carbon), and Example 2 (1% carbon), it can be seen that water loss increases as the carbon black loading increases. The material of Example 2 also yields the lowest cold crank time. However, the presence of additional organic molecule expander (Examples 3 and 4) resulted in reduced water loss, relative to Example 2, and increased cold crank time.

### Example 10 (Reference)

This Example describes the preparation of an NAM paste via a dry mix.

Leady oxide (1000 g, 75 % degree of oxidation, Barton oxide from Monbat PLC, Bulgaria) was introduced into the paste mixer. After 2 minutes of stirring, $BaSO_4$ (8 g), Vanisperse A (2 g) and carbon black (10 g, PBX51®, Cabot Corporation) were added. The dry mixture was homogenized in the paste mixer via stirring for an additional 3 minutes followed by the addition of water (140 g). The paste was mixed for 5 minutes at which point $H_2SO_4$ (80 mL, specific density = 1.4 g/cm$^3$) was added slowly under continuous stirring. The temperature was maintained below 60°C while stirring was continued for 15 minutes. More water can be added to adjust paste rheology; however, this was not needed for this example.

### Example 11

This Example describes the preparation of an NAM paste via the addition of a prewetted mixture of expander and carbon black.

Leady oxide (1000 g, 75 % degree of oxidation, Barton oxide from Monbat PLC, Bulgaria) was introduced into the paste mixer. After 2 minutes of stirring, $BaSO_4$ (8 g) was added along with a mixture of Vanisperse A (2 g) and carbon black (10 g, PBX51®, Cabot Corporation) that was prewetted with water (22 g). The dry mixture was homogenized in the paste mixer via stirring for an additional 3 minutes followed by the addition of water (140 g). The paste was mixed for 5 minutes at which point $H_2SO_4$ (80 mL, specific density = 1.4 g/cm$^3$) was added and mixed for 15 minutes. More water can be added to adjust paste rheology; however, this was not needed for this example.

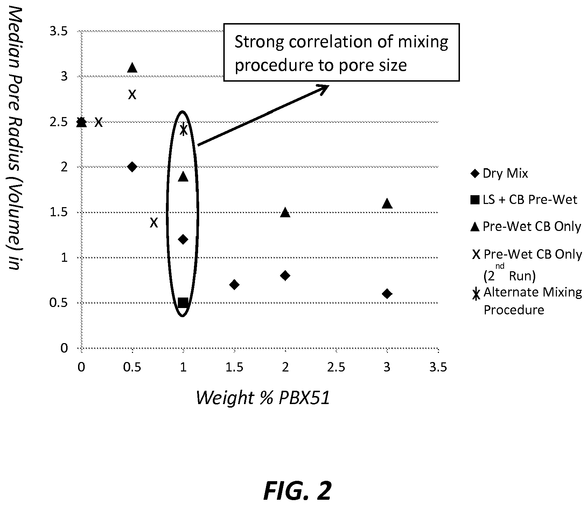

FIG. 2 is a graph depicting the correlation of mixing method of carbon black with lignosulfonate and amount of carbon black (x-axis, wt. %) with pore size (y-axis, median pore radius (volume, μm)) where: ♦ dry mix of lignosulfonate (LS) + PbO + carbon (Example 10); ■ prewetted mix of LS + carbon (Example 11); ▲ prewetted carbon (Example 2); × prewetted carbon (2nd run, Example 2); ✴ lignosulfonate + PbO + $H_2SO_4$ followed by addition of prewetted carbon (Example 5). From FIG. 2, it can be seen that the disclosed methods in the disclosed amounts provide the largest median pore size.

The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

**Claims**

1. A method of making a negative electrode active material composition for a lead acid battery comprising a carbon black having a surface area of at least 250 m$^2$/g and an organic molecule expander, wherein the ratio of the carbon black to expander ranges from 5:1 to 1:1, said method comprising:

combining a lead oxide, the organic molecule expander, and BaSO$_4$ to form a dry powder mixture;
adding a pre-wetted carbon black having a surface area of at least 250 m$^2$/g to the dry powder mixture;
combining sulfuric acid and water with the mixture containing the carbon black to form a slurry;
forming a paste intermediate of the negative electrode active material composition; and
drying the paste intermediate to form a solid negative electrode active material composition,
wherein the negative electrode active material composition is a porous solid having a median pore size ranging from 0.8 $\mu$m to 4 $\mu$m.

2. The method of claim 1, wherein the carbon black has a surface area ranging from 250 m$^2$/g to 2100 m$^2$/g.

3. The method of claim 1 or 2, wherein the carbon black is added in an amount ranging from 0.05% to 3% by weight and the organic molecule expander is added in an amount ranging from 0.1% to 1.5% by weight, relative to the total weight of the composition.

**Patentansprüche**

1. Verfahren zum Herstellen einer Negativelektrodenaktivmaterialzusammensetzung für eine Blei-Säure-Batterie, umfassend einen Ruß mit einer Oberfläche von mindestens 250 m$^2$/g und ein organisches Expandermolekül, wobei das Verhältnis des Rußes zum Expander von 5:1 bis 1:1 reicht, wobei das Verfahren umfasst:

Vereinigen eines Bleioxids, des organischen Expandermoleküls und BaSO$_4$, um ein trockenes Pulvergemisch zu bilden;
Zugeben eines vorbefeuchteten Rußes mit einer mit einer Oberfläche von mindestens 250 m$^2$/g zu dem trockenen Pulvergemisch;
Vereinigen von Schwefelsäure und Wasser mit dem rußhaltigen Gemisch, um eine Aufschlämmung zu bilden;
Bilden eines Pasten-Zwischenprodukts der Negativelektrodenaktivmaterialzusammensetzung und
Trocknen des Pasten-Zwischenprodukts, um eine feste Negativelektrodenaktivmaterialzusammensetzung zu bilden,
wobei die Negativelektrodenaktivmaterialzusammensetzung ein poröser Feststoff mit einer von 0,8 $\mu$m bis 4 $\mu$m reichenden mittleren Porengröße ist.

2. Verfahren nach Anspruch 1, wobei der Ruß eine von 250 m$^2$/g bis 2100 m$^2$/g reichende Oberfläche aufweist.

3. Verfahren nach Anspruch 1 oder 2, wobei der Ruß in einer Menge zugegeben wird, die von 0,05 Gew.-% bis 3 Gew.-% reicht, und das organische Expandermolekül in einer Menge zugegeben wird, die von 0,1 Gew.-% bis 1,5 Gew.-% reicht, bezogen auf das Gesamtgewicht der Zusammensetzung.

**Revendications**

1.  Procédé de fabrication d'une composition de matériau actif d'électrode négative pour une batterie au plomb-acide comprenant un noir de carbone ayant une surface spécifique d'au moins 250 m$^2$/g et un agent d'expansion de molécule organique, dans lequel le rapport du noir de carbone à l'agent d'expansion est dans la plage de 5:1 à 1:1, ledit procédé comprenant les étapes consistant à :

    combiner un oxyde de plomb, l'agent d'expansion de molécule organique et du BaSO$_4$ pour former un mélange de poudre sèche ;
    ajouter un noir de carbone pré-humidifié ayant une surface spécifique d'au moins 250 m$^2$/g au mélange de poudre sèche ;
    combiner de l'acide sulfurique et de l'eau avec le mélange contenant le noir de carbone pour former une suspension ;
    former une pâte intermédiaire de la composition de matériau actif d'électrode négative ; et
    sécher la pâte intermédiaire pour former une composition de matériau actif d'électrode négative solide,
    dans lequel la composition de matériau actif d'électrode négative est un solide poreux ayant une taille de pore médiane dans la plage de 0,8 μm à 4 μm.

2.  Procédé selon la revendication 1, dans lequel le noir de carbone a une surface spécifique dans la plage de 250 m$^2$/g à 2 100 m$^2$/g.

3.  Procédé selon la revendication 1 ou 2, dans lequel le noir de carbone est ajouté en une quantité dans la plage de 0,05 % à 3 % en poids, et l'agent d'expansion de molécule organique est ajouté en une quantité dans la plage de 0,1 % à 1,5 % en poids, par rapport au poids total de la composition.

**FIG. 1A**
(prior art)

**FIG. 1B**

**FIG. 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008152955 A

- JP H05174825 A

**Non-patent literature cited in the description**

- **PAVLOV.** Lead Acid Batteries. Elsevier Publishing, 2011